Europäisches Patentamt

European Patent Office

Office européen des brevets

(19)

(11) Veröffentlichungsnummer: **0 037 909**
**B1**

(12) **EUROPÄISCHE PATENTSCHRIFT**

(45) Veröffentlichungstag der Patentschrift: **28.11.84**

(21) Anmeldenummer: **81101905.8**

(22) Anmeldetag: **14.03.81**

(51) Int. Cl.³: **B 23 F 21/10**

(54) Schrägschneidrad mit Treppenscharfschliff.

(30) Priorität: **10.04.80 CH 2735/80**

(43) Veröffentlichungstag der Anmeldung:
**21.10.81 Patentblatt 81/42**

(45) Bekanntmachung des Hinweises auf die
Patenterteilung:
**28.11.84 Patentblatt 84/48**

(84) Benannte Vertragsstaaten:
**DE FR GB IT**

(56) Entgegenhaltungen:
**FR-A-1 447 376**

**DEUTSCHE NORMEN, DIN 1829 - Teil 1,
November 1977, Berlin, "Schneidräder für
Stirnräder", Seiten 1 bis 16**

(73) Patentinhaber: **Maag-Zahnräder und -Maschinen
Aktiengesellschaft
Hardstrasse 219
CH-8023 Zürich (CH)**

(72) Erfinder: **Clarenbach, Johannes, Dipl.-Ing.
Bernsteinweg 5
D-7506 Herrenalb (DE)**

(74) Vertreter: **Hotz, Klaus, Dipl.-El.-Ing. / ETH
c/o Maag-Zahnräder und -Maschinen
Aktiengesellschaft Hardstrasse 219
CH-8023 Zürich (CH)**

Courier Press, Leamington Spa, England.

**Beschreibung**

Die Erfindung betrifft ein Schrägschneidrad mit Treppenscharfschliff, dessen hohe und tiefe Zahnflanken je eine Evolventenschraubenfläche und deren Evolventen, in beliebigen achsnormalen Ebenen gemessen, durch entsprechende Geraden dargestellt werden können.

Schräge Aussen- und Innenstirnräder lassen sich im Wälzstossverfahren mit einem Schrägschneidrad erzeugen, das eine Wälzdrehung und zusätzlich eine oszillierende Schraubbewegung ausführt. Die Schneidkanten der Schneidradzähne hüllen dabei ein gedachtes Schrägstirnrad ein, das sich am Werkrad abwälzt.

Schneidräder für Stirnräder sind Gegenstand der deutschen Norm DIN 1829, deren Teil 1 Begriffe und Bestimmungsgrössen unter anderem für Schrägschneidräder mit Treppenscharfschliff enthält. Die mittlere Flankenlinie eines Schrägschneidrades ist unter einem Schrägungswinkel, der auch derjenige des Werkrades ist, gegen die Radachse geneigt. Der Treppenscharfschliff ergibt sich dadurch, dass die Spanflächen der Schneidradzähne in bezug auf die achsnormale Stirnebene des Schrägschneidrades um einen Steigungswinkel geneigt sind, der im allgemeinen mit dem Zahnschrägungswinkel übereinstimmt. Beim Schrägschneidrad mit Treppenscharfschliff werden diejenigen Zahnflanken als hohe Flanken bezeichnet, deren Schneidkanten beim Blick in Achsrichtung auf die Spanfläche vorstehen, d.h. höher liegen. Die tiefen Flanken sind die mit den tiefer liegenden Schneidkanten.

(Uebrigens wird auch in der DIN 1829 schon von einer Korrektur gesprochen, dort handelt es sich aber in diesem Zusammenhang um eine gewollte Modifikation des Schneidrades, um mit diesem ein *korrigiertes* Produkt zu erzeugen).

Die Spanfläche jedes Schneidrades istunabhängig davon, ob es sich um ein Gerad- oder Schrägschneidrad handelt—um einen Spanwinkel n, der im allgemeinen die Grössenordnung 5° hat, gegen die Normalebene des Schneidrades geneigt.

Die Evolventenflächen, welche die Zahnflanken eines Schrägschneidrades bilden, sind nicht parallel zur Zahnlängsrichtung, sondern gegen diese um einen Freiwinkel $\zeta$ geneigt, der im Teilkreis üblicherweise 2° beträgt. Daraus ergibt sich bei dem infolge Abnutzung an den Span- und Freiflächen erforderlichen Nachschliffen eine Profilverschiebung des Schneidkantenprofils, die durch Verringern des Achsabstandes zwischen Schneidrad und Werkrad ausgeglichen wird. Das von den Schneidkanten der Zähne gebildete wirksame Zahnprofil, das auch uls Zahnprofil des gedachten Hüllschneidrades bezeichnet werden kann, weicht trotz Berücksichtigung von Span- und Freiwinkel in der Schneidradberechnung bei Gerad- und Schrägschneidrädern endlicher Zähnezahl infolge der Geometrie der Spanfläche von einem den Verzahnungsdaten des Werkrades entsprechenden genauen Evolventenprofil ab. Während jedoch die Profil-Formabweichungen bei Geradschneidrädern sehr gering sind und zudem immer in Form konkaver Abweichungen auftreten, die eine im allgemeinen erwünschte konvexe Profilkorrektur am Werkrad hervorrufen, erreichen die Profil-Formabweichungen bei Schrägschneidrädern mit zunehmendem Schrägungswinkel erhebliche Beträge, die ausserdem den Nachteil haben, dass sie auf der hohen und der tiefen Flanke entgegengesetzt gekrümmt sind, und zwar auf der hohen Flanke konvex und auf der tiefen Flanke konkav.

Bei Schrägschneidrädern mit Treppenscharfschliff sind die Profil-Formabweichungen der wirksamen Schneidkanten ausserdem mit Profil-Winkelabweichungen verbunden, derart, dass die ausmittelnden Geraden der mit Schneidentaster (siehe auch "Schneidentastermessung im Gegensatz zu Kugeltaster-Messung bei Schneidrädern", *Verzahnwerkzeuge*, Handbuch der Verzahntechnik LORENZ GmbH & Co., Ettlingen, Ausgabe 1977, S. 116) gemessenen oder durch Brechung bestimmten Prüfbilder der wirksamen Schneidkanten beim Vergleich des neuen Zustandes mit jedem Nachschliff infolge der durch die stetig abnehmende Profilverschiebung bewirkten stetigen Verlagerung des Profil-Prüfbereiches zu kleineren Wälzlängen zunehmend verschränkt sind. Diesen Profil-Winkelabweichungen am Schneidrad entsprechen Profil-Winkelabweichungen am Werkrad, die bisher nur dadurch in zulässigen Grenzen gehalten werden konnten, dass man von der gesammten Zahnbreite des Schneidrades nur einen verhältnismässig geringen Teil als Nutzbreite zuliess und somit die Anzahl der möglichen Nachschliffe, also die Nutzungsdauer des Schneidrades, entsprechend beschränken musste, um den Anforderungen an die Genauigkeit der mit Schrägschneidrädern hergestellten Zahnräder, beispielsweise für Kraftfahrzeuggetriebe, genügen zu können. Unter dieser Beschränkung leidet die Wirtschaftlichkeit des Einsatzes von Schrägschneidrädern trotz hoher Zerspannungsleistung, die den Einsatz von Schneidrädern gerade in der Grosserienfertigung besonders wünschenswert macht.

Der Erfindung liegt deshalb die Aufgabe zugrunde, die bisher bei Schrägschneidrädern infolge ihres Treppenscharfschliffes auftretenden und deshalb üblicherweise als Treppenschlifffehler bezeichneten Abweichungen zu vermindern, ohne die Herstellung oder Instandhaltung solcher Schrägschneidräder wesentlich aufwendiger zu machen.

Die Aufgabe ist erfindungsgemäss dadurch gelöst, dass durch eine Korrektur der Evolventenschraubenfläche, die mit Kugeltaster in achsnormalen Ebenen gemessenen Evolventenprofile voneinander abweichen derart, dass die durch die Endpunkte der Eingriffsstrecken in den Prüfbildern dieser Profile gezogenen Geraden sich beim Vergleich jedes Nachschliffs mit dem Nenustand zunehmend in Form von Verschränkungen unterscheiden, die den Verschränkungen der ausmittelnden Geraden der an den Schneidkanten mit Schneidentaster gemessenen Prüfbilder der wirksamen Schneidkanten eines unkorrigierten, mit exakten Evolventen ausgebildeten Schneidrades entgegengesetzt sind.

Bei einer bevorzugten Ausführungsform eines erfindungsgemäßen Schrägschneidrades beträgt die Verschränkung der ausmittelnden Geraden der Evolventenschraubenflächen beim Vergleich des neuen Zustandes mit dem letzten möglichen Nachschliff des Schrägschneidrades null bis vierzig Winkelminuten, vorzugsweise vier bis fünfundzwanzig Winkelminuten, bezogen auf die Änderung der betreffenden Normaleingriffswinkel.

Die Erfindung wird im folgenden anhand schematischer Zeichnungen näher erläutert. Es zeigen:

Fig. 1A einen Schnitt parallel zur Mittenebene eines Zahnes eines Schrägschneidrades,

Fig. 1B den Teilzylinderschnitt B—B in Fig. 1A,

Fig. 1C den Normalschnitt C—C in Fig. 1B,

Fig. 1D einen Schnitt desselben Schrägschneidrades in einer die Schneidradachse enthaltenden Ebene,

Fig. 1E den Stirnschnitt E—E in Fig. 1D,

Fig. 2A ein mit einem Evolventenprüfgerät mittels Schneidentaster aufgenommenes (oder berechnetes) Prüfbild der wirksamen Schneidkante einer hohen Zahnflanke, deren Evolventenschraubenfläche im Stirnschnitt ein übliches, exakt evolventenförmiges Profil aufweist,

Fig. 2B ein entsprechendes Prüfbild der wirksamen Schneidkante einer tiefen Zahnflanke,

Fig. 3A zwei übereinander projizierte Prüfbilder der wirksamen Schneidkante der hohen Zahnflanke nach dem ersten und nach dem letzten möglichen Treppenscharfschliff,

Fig. 3B zwei entsprechende Prüfbilder der tiefen Zahnflanke,

Fig. 4A eine durch Spiegelung des in Fig. 3A dargestellten Prüfbildes an einer waagerechten Bezugslinie sich ergebende gedachte Korrektur der hohen Zahnflanke, welche die Fehler von deren wirksamer Schneidkante vollständig ausgleichen würde,

Fig. 4B die entsprechende gedachte Korrektur der tiefen Zahnflanke,

Fig. 5A das Prinzip der Erzeugung der Evolventenschraubenfläche einer hohen Zahnflanke mit Korrektur im Wälzverfahren,

Fig. 5B einander überlagerte, mit Kugeltaster im Stirnschnitt gemessene Prüfbilder der in Fig. 5A dargestellten, mit außermittigem Rollbogen wälzgeschliffenen Zahnflanke am vorderen und am hinteren Ende ihres nutzbaren Bereichs,

Fig. 6A das Prinzip der Erzeugung der Evolventenschraubenfläche einer tiefen Zahnflanke mit Korrektur im Wälzverfahren,

Fig. 6B einander überlagerte, mit Kugeltaster gemessene Prüfbilder der in Fig. 6A dargestellten tiefen Zahnflanke, die durch Wälzschleifen mit außermittigen Rollbogen eine zur Kompensation der Balligkeit ihrer wirksamen Schneidkante an sich richtige Korrektur erhalten hat, die jedoch den falschen Drehsinn der Ausgleichsverschränkung der ausmittelnden Geraden aufweist,

Fig. 6C einander überlagerte, mit Kugeltaster gemessene Prüfbilder der in Fig. 6A dargestellten tiefen Zahnflanke, die durch Wälzschleifen mit außermittigem Rollbogen eine im Hinblick auf den richtigen Drehsinn der Verschränkung der ausmittelnden Geradan ihrer Schneidkanten richtige Korrektur erhalten hat,

Fig. 7A die Stirnansicht eines neuen Schneidradzahnes,

Fig. 7B die Stirnansicht des Zahnes im abgeschliffenen Zustand,

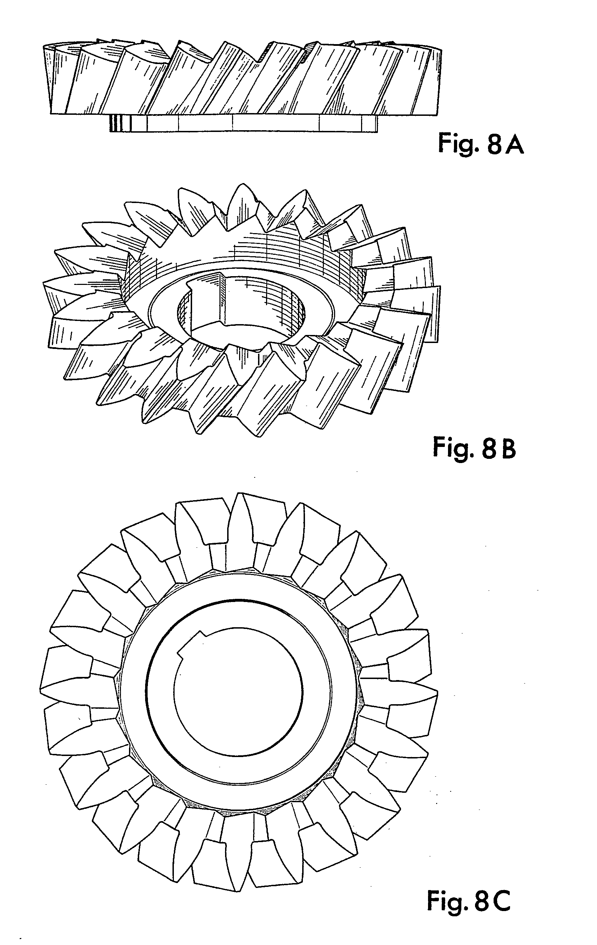

Fig. 8A eine Seitenansicht eines Schrägschneidrades mit Treppenscharfschliff,

Fig. 8B eine perspektivische Darstellung des Schrägschneidrades, und

Fig. 8C die Daufsicht des Schrägschneidrades.

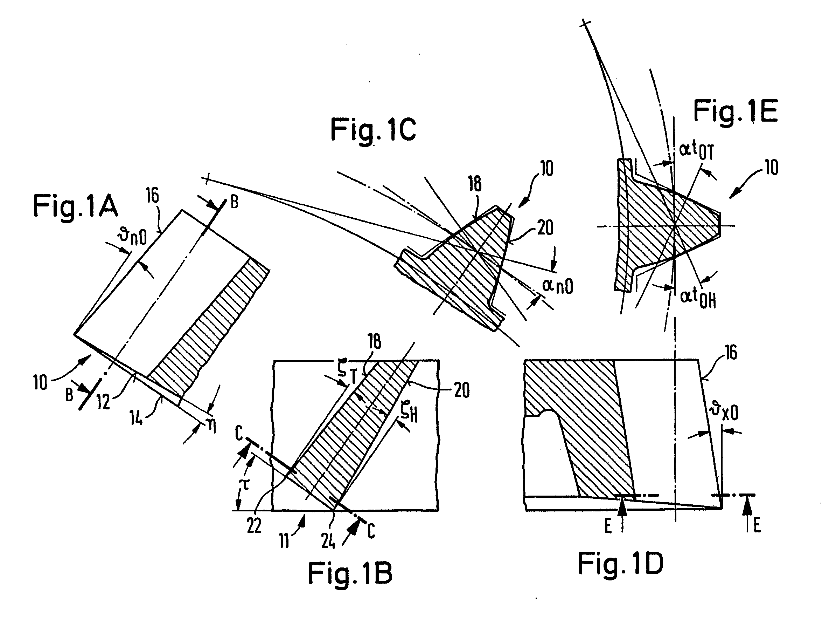

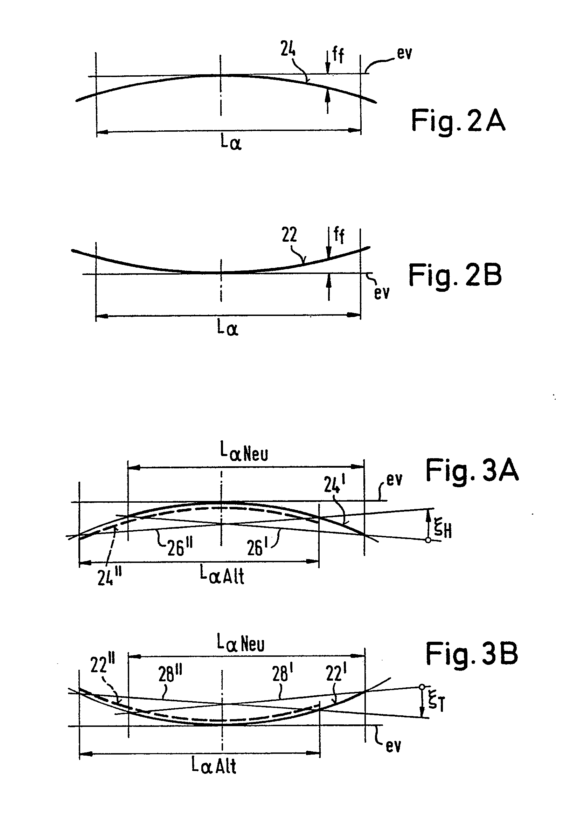

Die Darstellung von Teilen eines Schrägschneidrades in Fig. 1A bis 1D entspricht DIN 1829 Teil 1 Seite 8. Jeder Zahn 10 des Schrägschneidrades hat eine Spanfläche 12, die im Schnitt durch die Zahnmittenebene gemäß Fig. 1A gegen die Normalebene 14 des Schneidradzahnes um den Spanwinkel $\eta$ geneigt ist und ferner im Teilzylinderschnitt gemäß Fig. 1B gegen die Stirnebene 11 um den Steigungswinkel $\tau$ geneigt ist. Jeder Zahn hat ferner eine Zahnkopffläche 16, die im Achsschnitt gemäß Fig. 1D um den Freiwinkel $v_{x0}$ geneigt ist. Ferner hat jeder Zahn eine tiefe Flanke 18 und eine hohe Flanke 20, die gegen die Zahnmittenebene gemäß Fig. 1B um den Flankenfreiwinkel $\zeta_H$ bzw. $\zeta_T$ geneigt sind. Die Schneidrad-Eingriffswinkel in achsnormaler Schnittebene an der tiefen Flanke 18 bzw. der hohen Flanke 20 sind in Fig. 1E mit $\alpha_{toT}$ bzw. $\alpha_{toH}$ bezeichnet. Die tiefe Zahnflanke 18 bildet mit der Spanfläche 12 gemäß Fig. 1B eine Schneidkante 22, während die hohe Zahnflanke 20 mit der Spanfläche 12 eine Schneidkante 24 bildet, deren wirksame Stirnschnitt-Zahnformen in Fig. 2B bzw. Fig. 2A als Evolventenprüfbilder dargestellt sind.

Unter der Voraussetzung, daß die Zahnflanken 18 und 20 auf je einer exakten Evolventenschraubenfläche liegen, ist deren in beliebigem Stirnschnitt berechenbares oder mit einem Kugeltaster meßbares Profil eine Evolvente, die in dem üblichen Evolventenprüfbild als waagerechte Gerade erscheint. Eine solche Evolvente ist in den Figuren jeweils mit eve bezeichnet. Unterhalb dieser Evolvente erscheint in Fig. 2A das mit einem Schneidentaster meßbare Prüfbild der wirksamen Schneidkante 24 der hohen Zahnflanke in Gestalt eines konvexen Bogens. In entsprechender Weise erscheint die wirksame Schneidkante 22 der tiefen Zahnflanke 18 in Fig. 2B oberhalb der Evolvente ev als konkaver Bogen. Die Profil-Formabweichung $f_f$ des Prüfbildes der wirksamen Schneidkanten 22 und 24 bezeichnet den Treppenschliffehler, den die Schneidkanten 22 und 24 aufweisen, obwohl sie an Zahnflanken 18 bzw. 20 ausgebildet sind, deren berechenbares oder mit Kugeltaster meßbares Prüfbild im Stirnschnitt voraussetzungsgemäß und in der bisher üblichen Weise genau evolventenförmig ist. Die in Fig. 2A und 2B dargestellten Evolventenprüfbilder der Schneidkanten 24 bzw. 22 sind beliebig herausgegriffen, d.h. es handelt sich um Schneidkanten nach einem beliebigen Scharfschliff.

In Fig. 3 sind zwei Prüfbilder der Schneidkante 24 der hohen Zahnflanke 20 dargestellt, und zwar ein Prüfbild 24', das sich nach dem ersten Scharfschliff, also bei der Herstellung desselben Schrägschneidrades ergibt, dessen Prüfbilder auch in Fig. 2A und 2B dargestellt sind. Ferner ist in Fig. 3A das Prüfbild 24'' dargestellt, das die Schneidkante 24 an der hohen Zahnflanke 20 desselben Schrägschneidrades nach dem letzten möglichen Scharfschliff ergibt. Die beiden Prüfbilder, die sich teilweise überdecken, sind ergänzt durch je eine ausmittelnde Gerade 26' bzw. 26'', welche die beiden Enden der Eingriffsstrecke $L\alpha_{Neu}$ bzw. $L\alpha_{Alt}$ der Schneidkante 24 der hohen Zahnflanke 20 im neuen bzw. alten Zustand miteinander verbindet und die Lage des Prüfbildes in bezug auf die exakte Evolvente ev kennzeichnet.

In entsprechender Weise sind in Fig. 3B die Prüfbilder 22' und 22'' der Schneidkante 22 der tiefen Zahnflanke 18 nach dem ersten und nach dem letzten möglichen Scharfschliff, also in neuem und in altem Zustand, dargestellt und auch hier sind die zugehörigen ausmittelnden Geraden 28' und 28'' eingezeichnet.

Die gesamte bisherige Darstellung beruht, um dies noch einmal hervorzuheben, auf der Voraussetzung, daß die Prüfbilder der tiefen Zahnflanke 18 und der hohen Zahnflanken 20 des Schrägschneidrades, wie bisher angestrebt, auf der genauen Evolvente ev liegen, wenn man sie im Stirnschnitt mißt oder berechnet.

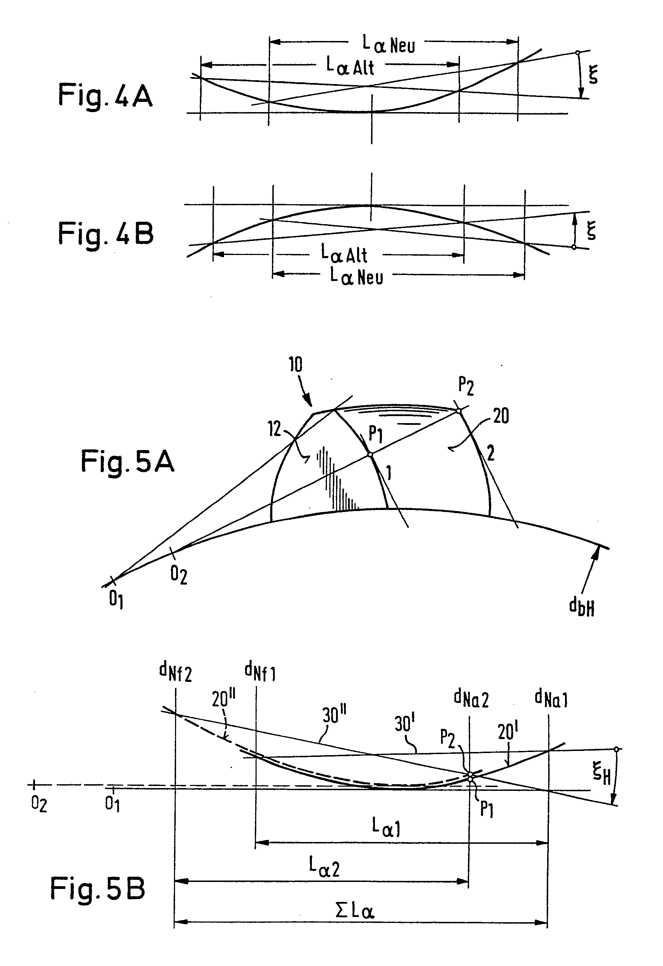

In Fig. 4A und 4B sind nun die Prüfbilder aus Fig. 3A und 3B an der waagerechten Bezugslinie, welche die exakte Evolvente ev darstellt, gespiegelt. Der Erfindung liegt die Erkenntnis zugrunde, daß sich die Treppenschliffehler weitgehende ausgleichen lassen, wenn die Evolventenschraubenflächen, welche die hohe Zahnflanke 20 bzw. die tiefe Zahnflanke 18 bilden, im Stirnschnitt derart von einem genauen Evolventenprofil abweichen, daß sich an diesen Zahnflanken die in Fig. 4A und 4B dargestellten Prüfbilder im Stirnschnitt mit einem Kugeltaster messen lassen. Es handelt sich hier wohlgemerkt nicht mehr um die Prüfbilder der Schneidkanten, die sich mit einem Schneidentaster messen lassen.

In Fig. 5A ist ein Zahn 10 des Schrägschneidrades mit Blickrichtung auf seine Stirnseite dargestellt; der Stirnschnitt erscheint hier in Draufsicht und die hohe Zahnflanke 20 in Schrägansicht. Von diesem Zahn interessieren im Zusammenhang mit Fig. 5B ein vorderer Stirnschnitt 1 und ein hinterer Stirnschnitt 2. Fig. 5A zeigt zwei verschiedenen Lagen der Erzeugenden einer hohen Zahnflanke 20. Der Zahnrücken ist dabei zwecks vereinfachter Darstellung zylindrisch (Schrägstirnrad) statt kegelig (Schrägschneidrad) gezeichnet.

In Fig. 5B sind nun die in diesen Stirnschnitten 1 und 2 im Wälzschliff mit entsprechenden Einrichtungen, beispielsweise mit außermittigem Rollbogen, erzeugten Korrektur-Prüfbilder 20' und 20'' der hohen Zahnflanke 20 dargestellt und die zugehörigen ausmittelnden Geraden mit 30' bzw. 30'' bezeichnet. Die zugehörigen Eingriffsstrecken sind als $L_{\alpha 1}$ bzw. $L_{\alpha 2}$ bezeichnet; die Summe dieser Eingriffsstrecken abzüglich ihrer Überlappung ist mit $\Sigma L_\alpha$ bezeichnet. Die ausmittelnde Gerade 30'' geht aus der ausmittelnden Geraden 30' durch eine Drehung um einen Verschränkungswinkel $\zeta_H$ hervor. Die Profilkorrektur der hohen Zahnflanken ist derart gewählt, daß der sich aus ihr ergebende Verschränkungswinkel $\zeta_H$ dem Betrag nach zumindest annähernd gleich groß, der Richtung nach aber entgegengesetzt ist zu dem entsprechenden Schränkungswinkel der Schneidkante 24 der hohen Zahnflanke 20 gemäß Fig. 3A. Auf diese Weise wird erreicht, daß die Profilkorrektur der hohen Zahnflanke 20 den Treppenschliffehler der Schneidkante 24 dieser Zahnflanke 20 vollständig oder wenigstens annähernd kompensiert, und zwar sowohl hinsichtlich deren balligen Abweichungen von der Evolvente ev wie hinsichtlich der Verschränkungen.

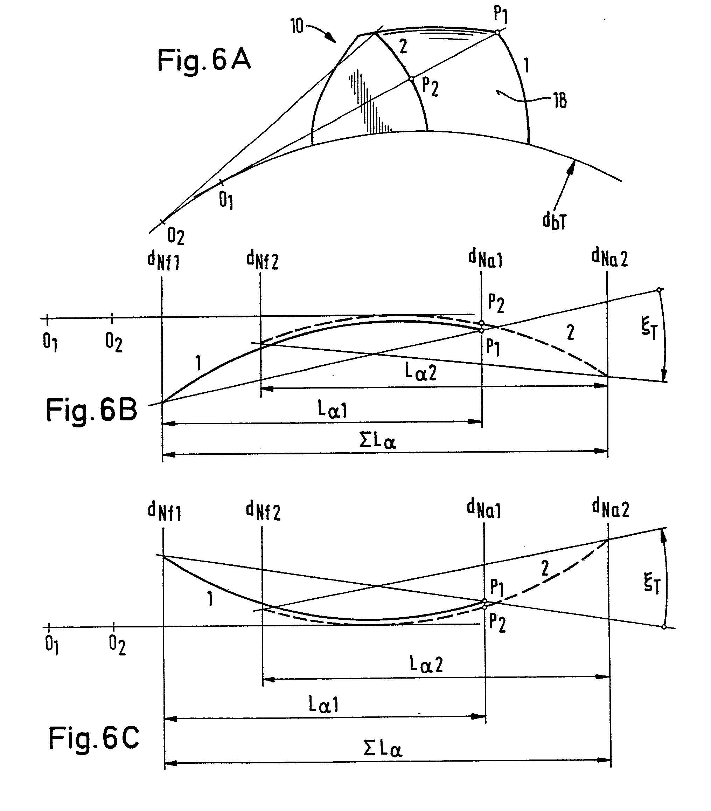

Bei der tiefen Zahnflanke 18, die in Fig. 6A in einer Rückenansicht des Zahns 10 dargestellt ist, läßt sich eine gleichermaßen vollständige Korrektur nicht durchführen, weil bei der Erzeugung der korrigierten tiefen Zahnflanke 18 im Wälzschliff mittels außermittigem Rollbogen die Reihenfolge der Prüfbilder in bezug auf den Balligkeitsverlauf sich umkehrt (siehe Fig. 6B), so daß die Verschränkung nicht den nach Fig. 4B gewünschten, aus der Treppenschliffehler-Berechnung hervorgegangenen Drehsinn erhält. Man hat die Wahl, gemäß Fig. 6B die infolge des Treppenschliffehlers auftretende ballige Abweichung der wirksamen Schneidkante 22 von der Evolvente ev weitgehend zu beseitigen und dabei eine zusätzliche Verschränkung $\zeta_T$ in Kauf zu nehmen, die mit derjenigen in Fig. 3D richtungsgleich ist; das Ergebnis ist dann, daß die ausmittelnden Geraden der mit Schneidentaster meßbaren Prüfbilder der wirksamen Schneidkante 22 nach dem ersten und nach dem letzten Scharfschliff eine entsprechend verstärkte Verschränkung aufweisen. Dies bedeutet, daß nur bei einem mittleren Abnutzungszustand des Schneidrades Werkräder gefertigt werden können, deren Eingriffswinkelabweichung an den von den Schneidkanten 22 bearbeiteten Flanken innerhalb enger Toleranzen liegen; im neuen und im nahezu vollständig verbrauchten Zustand erzeugt das Schneidrad dagegen Werkräder mit entsprechend vergrößerter, im allgemeinen nicht zulässiger Eingriffswinkelabweichung.

Deshalb ist es im allgemeinen vorzuziehen, die Profilkorrektur der tiefen Zahnflanke 18 gemäß Fig. 6C so zu wählen, daß die Verschränkung der ausmittelnden Geraden der mit Kugeltaster im Stirnschnitt meßbaren Prüfbilder in den Stirnschnitten 1 und 2 eine Verschränkung $\zeta_T$ aufweist, die der in Fig. 4B dargestellten entgegengerichtet ist. Die Schneidkante 22 der tiefen Zahnflanke 18 ergibt dann nach dem ersten und nach dem letzten möglichen Scharfschliff mit Schneidentaster meßbare Prüfbilder, deren Verschränkung gleich oder nahe null ist. Gegenüber diesem im Hinblick auf die Genauigkeit der Eingriffswinkel der Werkräder entschneidenden Vorteil ist es von untergeordneter Bedeutung, daß der größte Absolutbetrag der Profil-Formabweichung der Prüfbilder der Schneidkante 22 von der Evolvente ev größer ist als wenn eine Flankenkorrektur an der tiefen Zahnflanke 18 unterlassen worden wäre, zumal die vergrößerte Profil-Formabweichung eine vergrößerte Konvexballigkeit der erzeugten Werkrad-Zahnprofile bewirkt, die im allgemeinen erwünscht, in besonderen Fällen (Vorverzahnung der beim Rollen gezogenen Werkradflanken) sogar erforderlich ist.

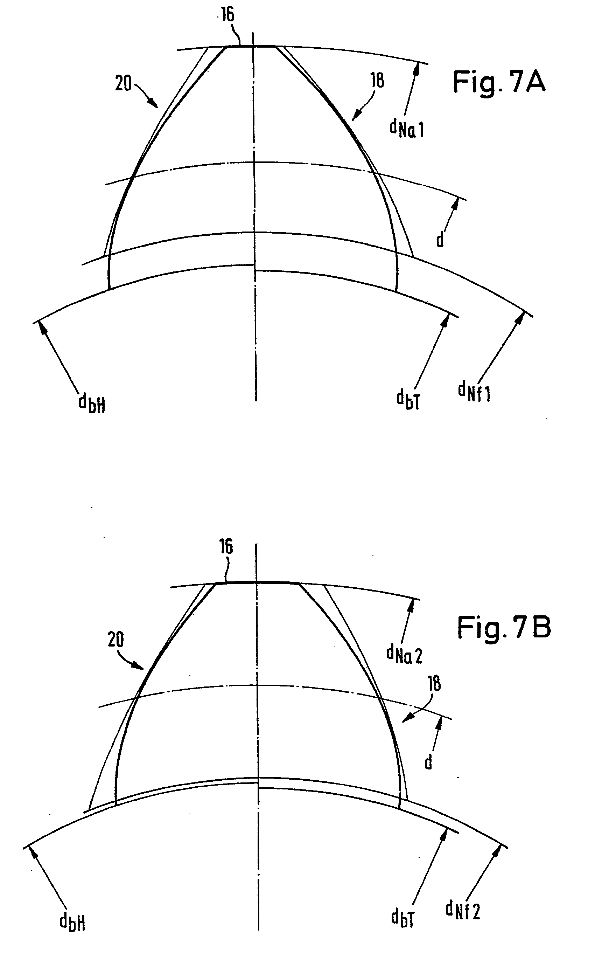

In Fig. 7A und 7B ist das unkorrigierte, genaue Evolventenprofil der tiefen Zahnflanke 18 und der hohen Zahnflanke 20 jeweils mit dicken Linien dargestellt, und zwar in Fig. 7A für den Stirnschnitt 1 und in Fig. 7B für den Stirnschnitt 2. Mit dünnen Linien sind schematisch und unmaßstäblich die zugehörigen Korrekturen dargestellt, welche die Flankenprofile in den betreffenden Stirnschnitten übereinstimmend mit Fig. 5B und Fig. 6C aufweisen müssen, damit sich die erwünschte Korrektur des Treppenschliffehlers der wirksamen Schneidkanten 22 und 24 ergibt.

## Patentansprüche

1. Schrägschneidrad mit Treppenscharfschliff, dessen hohe und tiefe Zahnflanken (20 bzw. 18) je eine Evolventenschraubenfläche und deren Evolventen, in beliebigen achsnormalen Ebenen gemessen, durch entsprechende Geraden dargestellt werden können, dadurch gekennzeichnet, dass durch eine Korrektur der Evolventenschraubenfläche, die mit Kugeltaster in achsnormalen Ebenen gemessenen Evolventenprofile voneinander abweichen darart, dass die durch die Endpunkte der Eingriffsstrecken in den Prüfbildern dieser Profile gezogenen Geraden sich beim Vergleich jedes Nachschliffs mit dem Neu-Zustand zunehmend in Form von Verschränkungen unterscheiden, die den Verschränkungen der ausmittelnden Geraden der an den Schneidkanten mit Schneidentaster gemessenen Prüfbilder der wirksamen Schneidkanten eines unkorrigierten, mit exakten Evolventen ausgebildeten Schneidrades entgegengesetzt sind.

2. Schneidrad nach Anspruch 1, dadurch gekennzeichnet, daß die Verschränkung der ausmittelnden Geraden der Evolventenschraubenflächen beim Vergleich des neuen Zustandes mit dem letzten möglichen Nachschliff des Schrägschneidrades einer Änderung des Normaleingriffswinkels $\alpha_n$ von 0 bis 40, vorzugsweise 4 bis 25 Winkelminuten entspricht.

## Revendications

1. Fraise à taille hélicoïdale à affûtages successifs, dont les profils de dents hauts et bas (20 et 18) décrivent chacun une surface hélicoïdale en développante, et dont les développantes, mesurées dans des plans normaux à l'axe quelconques, peuvent être décrites (ou représentées) par des droites adéquates, caractérisée en ce que, grâce à une correction des surfaces hélicoïdales en développante, les profils de développante mesurés à l'aide de palpeurs à bille dans des plans normaux à l'axe présentent entre eux des écarts tels que les droites tirées entre les points extrêmes des lignes de conduite sur les images de contrôle de ces profils, présentent entre elles des différences qui vont en croissant avec l'état nouveau lors de la comparaison de chaque affûtage, sous la forme de distorsions qui sont opposées aux distorsions des cordes des images de contrôle, mesurées sur les tranchants à l'aide de palpeurs à lame, des tranchants effectifs d'une fraise formée avec des développantes exactes, non corrigée.

2. Fraise selon la revendication 1, caractérisée en ce que la distorsion des cordes des surfaces hélicoïdales en développante correspond, lors de la comparaison de l'état nouveau avec le dernier affûtage possible de la fraise à taille hélicoïdale, à un changement de l'angle de pression réel $\alpha_n$ de 0 à 40, de préférence 4 à 25 minutes d'angle.

## Claims

1. Helical cutter wheel with step sharpening, whose upper and lower tooth flanks (20 and 18) each represent an involute helical surface and whose involutes, measured in any chosen planes normal to the axis, can be represented by corresponding straight lines, characterised in that by a correction of the involute helical surface, the involute profiles measured with a ball probe in planes normal to the axis differ from one another such that the straight lines produced through the end points of the paths of contact in the test diagrams of these profiles differ from one another increasingly when comparing each regrind with the original state in the form of displacements which are opposed to the displacements of the straight lines ascertained on test diagrams measured at the cutting edges with edge probe of the effective cutting edges of an uncorrected cutter wheel formed with exact involutes.

2. Cutter wheel according to claim 1, characterised in that when a comparison is made of the new state with the last possible regrind of the helical cutting wheel the displacement of the ascertained straight lines of the involute helical surfaces corresponds to a modification of the nominal pressure angle of 0 to 40, preferably 4 to 25, angular minutes.

Fig.1E

Fig.1C

Fig.1A

Fig.1D

Fig.1B

Fig. 2A

Fig. 2B

Fig. 3A

Fig. 3B

0 037 909

Fig. 4 A

Fig. 4 B

Fig. 5A

Fig. 5B

3

Fig. 6 A

Fig. 6B

Fig. 6C

Fig. 7A

Fig. 7B

Fig. 8 A

Fig. 8 B

Fig. 8 C